# EUROPÄISCHE PATENTSCHRIFT

(11) **EP 0 754 607 B1**
(45) Veröffentlichungstag und Bekanntmachung des Hinweises auf die Patenterteilung: **16.01.2002**
(21) Anmeldenummer: 96108683.2
(22) Anmeldetag: 30.05.1996
(51) Int. Cl.: B60T 8/00

(54) **Bremsanlage für Kraftfahrzeuge mit einem Bremskraftverstärker**
Vehicle brake installation with braking power amplifier
Installation de freinage de véhicules avec un amplificateur de la force de freinage

(30) Priorität: 17.07.1995 DE 19525985
(43) Veröffentlichungstag der Anmeldung: 22.01.1997
(73) Patentinhaber: Bayerische Motoren Werke Aktiengesellschaft, 80788 München (DE)
(72) Erfinder: Unterforsthuber, Jakob, 82216 Gernlinden (DE)

(56) Entgegenhaltungen:
- EP-A- 0 436 926
- DE-A- 2 723 811

## Beschreibung

Die Erfindung bezieht sich auf eine Bremsanlage für Kraftfahrzeuge mit einem Bremskraftverstärker nach dem Oberbegriff des Patentanspruchs 1.

Beispielsweise aus der DE 43 40 921 A1 ist eine Bremsanlage für Kraftfahrzeuge mit einem hydraulischen Radbremsregelsystem bekannt, durch das in den Radbremszylindem ein höherer als vom Fahrer eingesteuerter Druck erzeugbar ist. Der vom Fahrer auf den Hauptbremszylinder eingesteuerte Druck ergibt sich üblicherweise durch eine Ausgangsbremskraft eines Bremskraftverstärkers. Diese Ausgangsbremskraft ergibt sich durch die Überlagerung der Betätigungskraft, die vom Fahrer auf das Bremspedal ausgeübt wird, mit einer durch den Bremskraftverstärker erzeugten Hilfskraft.

Es sind Bremskraftverstärker bekannt, deren Hilfskraft in Abhängigkeit von verschiedenen Betriebsparametern des Kraftfahrzeugs bei einer bestimmten Betätigungskraft erschöpft ist. Beispielsweise ist bei Unterdruck-Bremskraftverstärkern die Hilfskraft im sog. Aussteuerungspunkt erschöpft. Der Aussteuerungspunkt ist beispielsweise von der Verstärkergröße und dem anliegenden Unterdruck in der mit der Unterdruckquelle verbundenen Kammer des Bremskraftverstärkers abhängig. Die Unterdruckquelle bei Otto-Motoren ist beispielsweise der momentane Unterdruck im Ansaugtrakt der Brennkraftmaschine. Dieser Unterdruck ist wiederum abhängig vom Betriebszustand, den Brennkraftmaschinensteuerungsparametern, der Drehzahl, der Temperatur, der Größe der Zylindereinheiten und dem Wirkungsgrad der Brennkraftmaschine. Somit kann der Aussteuerungspunkt bzw. das Unterschreiten eines vorgegebenen Verhältnisses der Hilfskraft zur Betätigungskraft nicht eindeutig einer festen Betätigungskraft zugeordnet werden.

Ist der Aussteuerungspunkt erreicht bzw. ist das vorgegebene Verhältnis der Hilfskraft zur Betätigungskraft unterschritten, ist eine weitere Erhöhung der Ausgangsbremskraft des Bremskraftverstärkers nur noch ausschließlich bzw. in stark erhöhtem Maße durch die Betätigungskraft des Fahrers möglich. Eine derartige Situation tritt beispielsweise dann auf, wenn der Unterdruck und/oder der Reibwert an der Radbremse sehr niedrig ist. Für eine Vollverzögerung müßte daher der Fahrer die Betätigungskraft ungewöhnlich stark steigern, um die gewünschte Verzögerung zu erreichen. Die Gefahr eines sehr niedrigen Unterdrucks wird zukünftig verstärkt bestehen, da sich die Brennkraftmaschinensteuerung zur Erfüllung der zukünftigen Abgasanforderungen auf die Unterdruckerzeugung stark negativ auswirken wird. Als Gegenmaßnahme könnten zwar die Bremskraftverstärker entsprechend vergrößert werden, jedoch bereitet die Unterbringung der Bremskraftverstärker bereits heute Bauraumprobleme. Außerdem werden die Bedieneigenschaften umso schlechter, je größer der Bremskraftverstärker ist.

Es ist Aufgabe der Erfindung, eine Bremsanlage eingangs genannter Art derart zu verbessern, daß zu jedem Betriebszustand des Kraftfahrzeugs die gewünschte Verzögerung durch eine Bremsmaßnahme erreicht wird, ohne einen größeren Bauraum für den Bremskraftverstärker zu benötigen.

Diese Aufgabe wird durch die kennzeichnenden Merkmale des Patentanspruchs 1 gelöst.

Erfindungsgemäß ist eine Auswertevorrichtung vorgesehen, die das Unterschreiten eines vorgegebenen Verhältnisses der Hilfskraft zur Betätigungskraft erkennt. Weiterhin ist eine Steuervorrichtung vorgesehen, die nach Unterschreiten dieses Verhältnisses mittels des hydraulischen Radbremsregelsystems einen Solldruck in den Radbremszylindem erzeugt, der die Auswirkung auf den Istdruck durch die im Verhältnis zur Betätigungskraft abnehmende Hilfskraft zumindest teilweise kompensiert.

Das Unterschreiten eines vorgegebenen Verhältnisses der Hilfskraft zur Betätigungskraft kann beispielsweise der für Unterdruck-Bremskraftverstärker definierte Aussteuerungspunkt oder auch eine zumindest nahezu vollständige Erschöpfung der Hilfskraft eines beliebigen anderen Bremskraftverstärkers sein. Allgemein liegt der Erfindung der Gedanke zugrunde, daß bei Abnahme der vom Fahrer üblicherweise erwarteten Hilfskraft der Druck im Radbremsregelsystem, beispielsweise durch eine ohnehin vorhandene Hydraulikpumpe, entsprechend der Abnahme der Hilfskraft erhöht wird. Vorzugsweise wird der Druck in den Radbremszylindem derart erhöht, daß eine Bremswirkung erreicht wird, die auftreten würde, wenn ohne zusätzlicher Erhöhung des Druckes das Verhältnis der Hilfskraft zur Betätigungskraft beibehalten werden würde.

Da für die Erfindung notwendige, hydraulische Radbremsregelsysteme, insbesondere Allrad-ASC-Regelsysteme, ohnehin bekannt und immer häufiger vorhanden sind, wird eine Verbesserung der Bremsanlage für Kraftfahrzeuge erreicht, ohne bauraumvergrößernde konstruktive Maßnahmen ergreifen zu müssen. Darüber hinaus entsteht bei keinem Fahrbetriebszustand für den Fahrer der Eindruck, daß die Bremsbetätigung keine Wirkung mehr zeigt.

Eine vorteilhafte Ausgestaltung der Erfindung ist der Gegenstand des Patentanspruchs 2.
Erfindungsgemäß ist durch die konstruktive Ausgestaltung des Bremskraftverstärkers dem Unterschreiten eines vorgegebenen Verhältnisses der Hilfskraft zur Betätigungskraft ein mechanischer Anschlag zugeordnet, der mit einer elektrischen Sensorvorrichtung zusammenwirkt.
Vorzugsweise wird bei Erschöpfung der Hilfskraft durch einen mechanischen Anschlag ein Schalter betätigt. Dies ist eine besonders einfache Art und Weise, eine abnehmende oder erschöpfte Hilfskraft zu erkennen.

Eine weitere vorteilhafte Ausgestaltung der Erfindung ist der Gegenstand des Patentanspruchs 3, der sich auf einen Hilfsdruck- (z.B. Überdruck- oder Unterdruck-) Bremskraftverstärker bezieht.
Das Unterschreiten eines vorgegebenen Verhältnisses der Hilfskraft zur Betätigungskraft entspricht dem zumindest nahezu vollständigen Erreichen des Aussteuerungspunktes des Hilfsdruck-Bremskraftverstärkers. Das zumindest nahezu vollständige Erreichen des Aussteuerungpunktes wird durch ein elektrisches Signal erfaßt, das eine Drucksensorvorrichtung abgibt, wenn der Hilfsdruck zumindest nahezu vollständig erschöpft ist.

Beispielsweise wird ein vollständiges Erreichen des Aussteuerungspunktes bei einem Unterdruck-Bremskraftverstärker durch einen Druckschalter in der bei Betätigung der Bremse mit Atmosphärendruck beaufschlagten Kammer erfaßt. Der Hilfsdruck ist erschöpft, wenn in der bei Betätigung der Bremse mit Atmosphärendruck beaufschlagten Kammer der Unterdruck in Atmosphärendruck übergegangen ist.
Alternativ kann jedoch beispielsweise auch das zumindest nahezu vollständige Erreichen des Aussteuerungspunktes durch einen Drucksensor in der bei Betätigung der Bremse mit Atmosphärendruck beaufschlagten Kammer ermittelt werden, der kontinuierlich den Unterdruckverlauf erfaßt. Vorzugsweise werden die elektrischen Signale der Sensorvorrichtung in der Kammer an die Auswertevorrichtung und die Steuervorrichtung weitergegeben.
Ein derartiger Drucksensor oder Druckschalter kann auch bei Hydraulik- und/oder Überdruck-Bremskraftverstärkern angewandt werden. Hierzu wird der Druck im Bremskraftverstärker z.B. mit dem Druck in der Druckenergieversorgungsleitung verglichen (Differenzdruckschalter).

Mit dieser erfindungsgemäßen Weiterbildung kann eine Abnahme bzw. eine erschöpfte Hilfskraft erkannt werden, ohne konstruktive Änderungen des Bremskraftverstärkers vornehmen zu müssen.

In der Zeichnung ist ein Ausführungsbeispiel der Erfindung dargestellt. Es zeigt
- Fig. 1: einen Unterdruck-Bremskraftverstärker bei unbetätigtem Bremspedal,
- Fig. 2: einen Unterdruck-Bremskraftverstärker bei leicht betätigtem Bremspedal,
- Fig. 3: einen Unterdruck-Bremskraftverstärker im Aussteuerungspunkt und
- Fig. 4: eine erfindungsgemäße Druckerhöhung nach Erreichen des Aussteuerungspunktes.

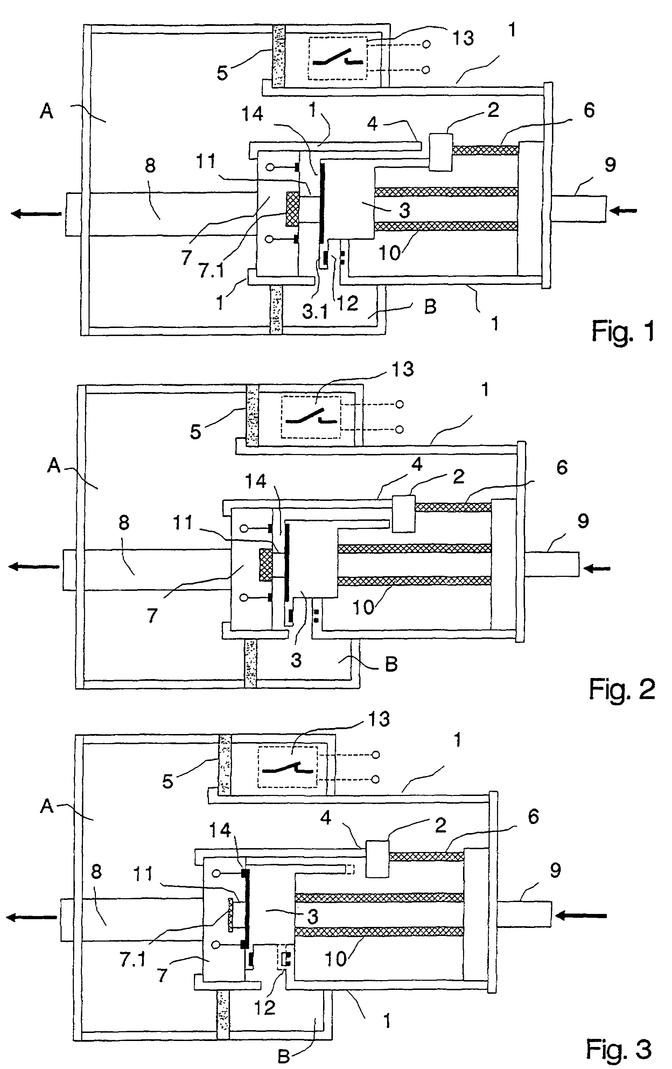

In den Fig. 1 bis 3 sind gleiche Teile mit gleichen Bezugszeichen versehen. In dem Ausführungsbeispiel ist als Bremskraftverstärker ein Unterdruck-Bremskraftverstärker schematisch dargestellt.

Entsprechend der Fig. 1 bis 3 weist der Bremskraftverstärker zwei Kammern A und B auf. Die Unterteilung des Bremskraftverstärkers in diese zwei Kammern A und B schafft die elastische Membran 5. Die Kammer A ist mit einer hier nicht dargestellten Unterdruckquelle verbunden. Ein Ventilgehäuse 1 ist mit der Membran 5 fest verbunden und steuert bei der Betätigung der Bremse den Atmosphärenlufteinlaß in die Kammer B.

Eine Betätigungsstange 9 ist mit dem Bremspedal wirkverbunden. Mit der Betätigungsstange 9 ist über eine Feder 6 ein Steuerventil 2 verbunden. Weiterhin ist an der Betätigungsstange 9 über eine Feder 10 ein Ventilkolben 3 mit einem Fühlkolben 11 befestigt. Der Ventilkolben 3 oder dessen Riegel 3.1 weist eine elektrisch leitende Bahn auf, die als Schalter 14 mit gegenüberliegenden Kontakten, die auf einer Reaktionsscheibe 7 aufgebracht sind, zusammenwirken kann. Die Reaktionsscheibe 7 ist zumindest im Bereich 7.1 elastisch.

Die Reaktionsscheibe 7 ist mit einem Reaktionskolben 8 verbunden, der bei Betätigung des Bremspedals auf den hier nicht mehr dargestellten Hauptbremszylinderkolben drückt. Auf die Reaktionsscheibe 7 trifft der Fühlkolben 11 auf.

In Fig. 1 sind beide Kammern A und B durch einen geöffneten Kanal zwischen dem Steuerventil 2 und der Dichtkante 4 des Ventilgehäuses 1 verbunden. Hierdurch herrscht gleicher Unterdruck in beiden Kammern A und B. Eine Sensorvorrichtung 13 in Form eines Druckschalters ist in der Kammer B angeordnet und mit einer hier nicht dargestellten Auswerte- und Steuervorrichtung elektrisch verbunden. Der Druckschalter 13 ist solange geöffnet, bis in der Kammer B der Unterdruck abgebaut wurde und Atmosphärendruck herrscht (vgl. Fig. 3). Solange kein Atmosphärendruck in der Kammer B herrscht und/oder solange der Schalter 14 geöffnet ist, ist der Aussteuerungspunkt noch nicht erreicht. In Fig. 1 sperrt das Steuerventil 2 jedoch den Zugang zur Atmosphäre noch ab.

In Fig. 2 wird das Bremspedal und damit die Betätigungsstange 9 in Pfeilrichtung leicht betätigt, wodurch sich der Ventilkolben 3 mit anliegendem Steuerventil 2 zur Dichtkante 4 am Ventilgehäuse 1 bewegt. Hierdurch wird der zuvor geöffnete Kanal zwischen dem Steuerventil 2 und der Dichtkante 4 geschlossen und somit die Verbindung zwischen den beiden Kammern A und B unterbrochen. Die Schalter 13 und/oder 14 sind weiterhin beide geöffnet.

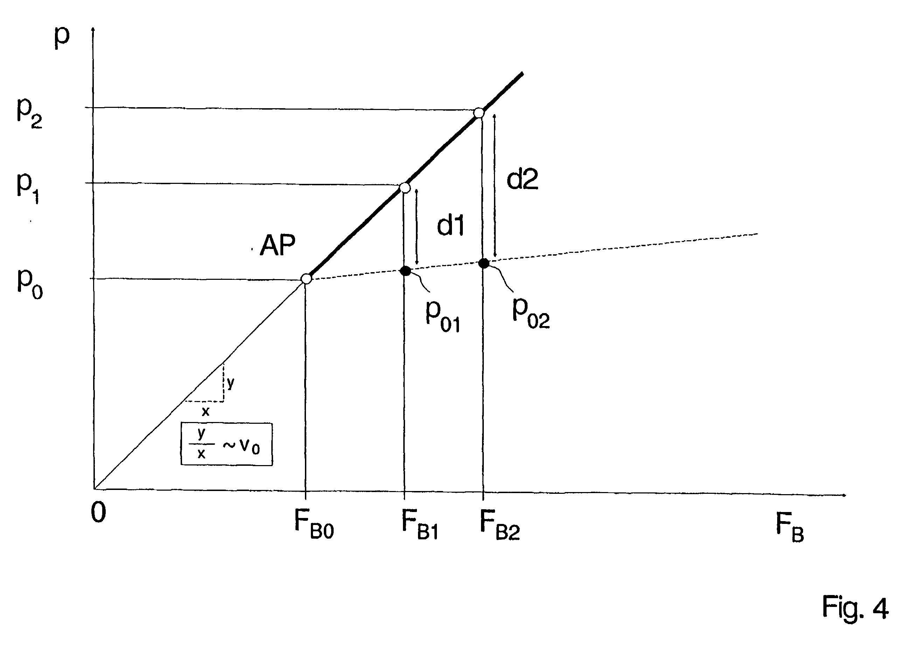

Gemäß Fig. 3 hebt bei weiterer Betätigung der Betätigungsstange 9 der Ventilkolben 3 vom Steuerventil 2 weiter ab (vgl. gestrichelte Linie des Ventilkolbens 3). Luft mit Atmosphärendruck strömt durch Kanäle im Ventilgehäuse 1 zur Kammer B. Die Kammer A hat ständig eine Verbindung zur Unterdruckquelle. Der Atmosphärendruck wirkt auf die Membran 5. Da die Membran 5 mit dem Ventilgehäuse 1 fest verbunden ist, wird das Ventilgehäuse 1 mitgenommen. Hierdurch wird die über die Betätigungsstange 9 auf die Reaktionsscheibe 7 ausgeübte Betätigungskraft F_{B} (Fig. 4) mit einer Hilfskraft überlagert, wodurch sich die mit dem linken Pfeil dargestellte Ausgangsbremskraft des Bremskraftverstärkers ergibt. Der Kraftverlauf erfolgt über das Ventilgehäuse 1, die Reaktionsscheibe 7 und den Reaktionskolben 8. Die Hilfskraft und die Betätigungskraft stehen bis zum Aussteuerungspunkt (AP) gemäß der inneren Verstärkerübersetzung in einem vorgegebenen Verhältnis v₀ (Fig. 4).

Bei kontinuierlicher Erhöhung der Betätigungskraft F_{B} wird der Unterdruck in der Kammer B kontinuierlich gemindert. In Abhängigkeit von dem in der Kammer A gerade herrschenden Unterdruck wird bei einer bestimmten Betätigungskraft F_{B0} der Aussteuerungspunkt AP erreicht (Fig. 4). Die Ausgangsbremskraft des Bremskraftverstärkers kann nunmehr lediglich durch Erhöhung der Betätigungskraft ohne Hilfskraftüberlagerung erfolgen.

Da im Aussteuerungspunkt in der Kammer B nunmehr voller Atmosphärendruck herrscht, ist in Fig. 3 der Schalter 13 geschlossen. Weiterhin ist auch der Schalter 14 durch den mechanischen Anschlag des Ventilkolbens 3 bzw. des Riegels 3.1 auf der Reaktionsscheibe 7 geschlossen. Im Aussteuerungspunkt wird der elastische Bereich 7.1 der Reaktionsscheibe 7 durch den Fühlkolben 11 eingedrückt, so daß der Riegel 3.1 des Ventilkolbens 3, der die leitende Kontaktbahn aufweist, an die gegenüberliegenden Kontaktpunkte, die auf dem Ventilgehäuse 1 (hier nicht dargestellt) oder auf der Reaktionsscheibe 7 aufgebracht sind, angelegt wird. Diese Position entspricht dem mechanischen Anschlag, der dem Aussteuerungspunkt AP bzw. dem Unterschreiten eines vorgegebenen Verhältnisses der Hilfskraft zur Betätigungskraft zugeordnet ist.
Hierdurch wird der Schalter 14 geschlossen, der ebenfalls mit der Auswerte- und Steuervorrichtung verbunden ist. Die Schalter 13 und 14 können alternativ oder in Kombination miteinander eingesetzt werden.

In einer Weiterbildung des Ausführungsbeispiels ist beispielsweise bei Anwendung des Schalters 14 für einen geregelten oder gesteuerten Druckabbau ein weiterer Schalter 12 vorgesehen, der geschlossen wird, wenn die Betätigungskraft F_{B} auf die Betätigungsstange 9 reduziert wird. Diese "Lösestellung" ist ebenfalls durch einen mechanischen Anschlag, der in diesem Fall den Schalter 12 schließt, definiert.

In Fig. 4 ist die erfindungsgemäße Regelung dargestellt, nachdem der Aussteuerungspunkt AP, der hier als Beispiel des Unterschreitens eines vorgegebenen Verhältnisses der Hilfskraft zur Betätigungskraft dient, erreicht und erkannt wurde.

In Fig. 4 ist auf der Abszisse die Betätigungskraft F_{B} und auf der Ordinate der Ist-Druck p in zumindest einem Radbremszylinder aufgetragen. Der Druck in den Radbremszylindern ist gleichbedeutend für die Erfindung mit dem Druck in den Hauptversorgungsleitungen des hydraulischen Radbremsregelsystems.

Ausgehend von der "Lösestellung" 0 wird die Betätigungskraft bis zu einem Wert F_{B0} erhöht. Der Verlauf des Ist-Drucks p in dem Radbremszylinder ist bis zu dem Wert p₀ gleich dem Soll-Druck in dem Radbremszylinder, der sich durch den Bremswunsch des Fahrers in Form der Betätigungskraft F_{B} ergibt. Beispielsweise ist in der Auswerte- und Steuervorrichtung eine Kennlinie abgelegt, die jedem Wert der Betätigungskraft F_{B} einen Soll-Druck p in den Radbremszylindern oder in der Hauptversorgungsleitung des hydraulischen Radbremsregelsystems zuordnet. Diese Kennlinie wird entsprechend dem vorgegebenen Verhältnis v₀ der Hilfskraft zur Betätigungskraft F_{B} definiert. Im dargestellten Beispiel nach Fig. 4 weist diese Kennlinie einen linearen Verlauf auf, mit einer Steigung y/x, die proportional zu dem vorgegebenen Verhältnis v₀ der Hilfskraft zur Betätigungskraft F_{B} ist. Dieses Verhältnis v₀ ergibt sich bis zum Aussteuerungspunkt AP allein durch konstruktive Maßnahmen des Bremskraftverstärkers. Jedoch ist der Aussteuerungspunkt selbst abhängig von der Höhe des Unterdrucks, der in der Kammer A vorherrscht.

Bei Erreichen des Aussteuerungspunktes AP wird das vorgegebene Verhältnis v₀ unterschritten. Die Hilfskraft ist zumindest nahezu vollständig erschöpft. Erhöhter Druck p in den Radbremszylindern ist nunmehr ausschließlich durch Erhöhung der Betätigungskraft F_{B} möglich (vgl. gestrichelte Linie). Bis zum Aussteuerungspunkt AP bzw. bis zum Erreichen des Ist-Druckes p₀, der bis zum Aussteuerungspunkt AP gleich dem Soll-Druck in den Radbremszylindern ist, findet durch das hydraulische Radbremsregelsystem noch keine zusätzliche Druckerhöhung zur Unterstützung der Betätigungskraft statt.

Durch die Auswertevorrichtung wird zur Erkennung des Fahrerwunsches beispielsweise die Betätigungskraft F_{B} erfaßt. Wird z.B. das Vorliegen einer Betätigungskraft F_{B1} erkannt, wird dieser Betätigunskraft F_{B1} der Soll-Druck p₁ zugeordnet. Daraufhin erzeugt das hydraulische Radbremsregelsystem diesen Soll-Druck p₁ durch Erhöhung des Druckes p um die Differenz d1 zwischen dem sich durch die Ausgangsbremskraft des Bremskraftverstärkers ergebenden Druck p₀₁ und dem Soll-Druck p₁. Ebenso wird auch bei der Erkennung einer Betätigungskraft F_{B2} vorgegangen. Durch die Ausgangsbremskraft des Bremskraftverstärkers bei einer Betätigungskraft F_{B2} würde sich ohne Druckerhöhung durch das hydraulische Radbremsregelsystem lediglich ein Ist-Druck p₀₂ einstellen. Durch Interpolation der Kennlinie durch den Aussteuerungspunkt AP wird jedoch ein Soll-Druck p₂ der Betätigungskraft F_{B2} zugeordnet. Das hydraulische Radbremsregelsystem erzeugt daraufhin wiederum den Soll-Druck p₂ durch Druckerhöhung um die Differenz d2 zwischen dem errechneten Ist-Druck p₀₂ und dem Soll-Druck p₂.

Die Steigung des gestrichelten Verlaufes des Ist-Druckes p, der sich in Abhängigkeit von der Betätigungskraft F_{B} ohne Druckerhöhung durch das hydraulische Radbremsregelsystem ergeben würde, ist bekannt. Der Beginn der gestrichelten Kennlinie wird jeweils an die Betätigungskraft F_{B} angelegt, bei der der Aussteuerungspunkt AP erreicht ist.

Es sind mehrere Kombinationsmöglichkeiten von Sensoren zur Erkennung des Aussteuerungspunktes und des Fahrerwunsches möglich:
Beispielsweise können nur der Schalter 14 und der Schalter 12 verwendet werden. Eine Auswerte- oder Steuervorrichtung (Steuergerät) ist nicht zwingend erforderlich, da die Schalter 14 und 12 die Hydraulikeinheit des Bremsdruckregelsystems zur Erhöhung des Drucks direkt ansteuern können. Auch können nur der Schalter 13, ein Pedalkraftsensor zur Ermittlung der Betätigungskraft F_{B} und eine Auswerte- oder Steuervorrichtung (Steuergerät) vorgesehen sein. Bei Erreichen des Aussteuerungspunktes AP wird in diesem Fall in Abhängigkeit von der Steigerung der Betätigungskraft F_{B} die Hydraulikeinheit eine vorgegebene Zeitspanne angesteuert.

Anstelle des Pedalkraftsensors kann auch ein Leitungsdrucksensor am Hauptzylinder vorhanden sein. Der Fahrerwunsch ergibt sich jeweils aus der Differenz d (d1; d2).
Auch kann, wie zu Fig. 4 beschrieben, ein Leitungsdrucksensor am Rad zur Ermittlung des Ist-Druckes p vorgesehen sein. Ab dem Ansteuerungpunkt AP wird der Druck p durch Steuerung oder Regelung auf den Soll-druck p₁ bzw. p₂ erhöht, wenn der Ist-Druck, der z.B. durch einen Leitungsdrucksensor am Hauptbremszylinder ermittelt wird, p₀₁ bzw. p₀₂ beträgt.
Auch könnte ein Pedalkraftsensor zur Ermittlung der Betätigungskraft F_{B1} und F_{B2} mit einem Leitungsdrucksensor am Hauptbremszylinder zur Ermittlung des Ist-Druckes p₀₁ und p₀₂ kombiniert werden. Der Druck wird erhöht, wenn die Betätigungskraft F_{B1} nicht den vorgegeben Soll-Druck p₁ sondern lediglich den Ist-Druck p₀₁ erzeugt. Hierbei wird die Druckerhöhung durch eine Steuerung vorgenommen.
Anstelle einer Steuerung kann jedoch auch eine Regelung in Abhängigkeit von dem mittels eines Leitungsdrucksensors am Rad erfaßten Ist-Druck p vorgenommen werden.
Vorzugsweise werden die Sensoren verwendet, die ohnehin in den bereits bekannten und verwendeten Radbremsregelsystemen vorhanden sind.

Der Abbau des erhöhten Bremsdruckes erfolgt z.B. in Abhängigkeit von der Stellung des Schalters 12 jeweils in umgekehrter Reihenfolge.

Ergänzend wird darauf hingewiesen, daß erfindungsgemäß die einem mechanischen Anschlag zugeordneten Schalter 12 und 14 in jedem beliebigen Bremkraftverstärker anwendbar sind. Der einem bestimmten Druck zugeordnete Schalter 13 kann in jedem Bremskraftverstärker vorgesehen werden, dessen Hilfskraft mittels Druck (z.B. Überdruck) bzw. Differenzdruck erzeugt wird.

Durch dieses erfindungsgemäße Ausführungsbeispiel wird eine optimale Verzögerung entsprechend dem Bremswunsch des Fahrers erreicht.

## Patentansprüche

1. Bremsanlage für Kraftfahrzeuge mit einem Bremskraftverstärker, der eine Ausgangsbremskraft durch die Überlagerung der Betätigungskraft mit einer Hilfskraft erzeugt, und mit einem hydraulischen Radbremsregelsystem, durch das in den Radbremszylindern ein höherer als der durch die Ausgangsbremskraft eingesteuerte Druck erzeugbar ist, **dadurch gekennzeichnet, daß** eine Auswertevorrichtung vorgesehen ist, die das Unterschreiten eines vorgegebenen Verhältnisses (v₀) der Hilfskraft zur Betätigungskraft (F_{B}) erkennt, und daß eine Steuervorrichtung vorgesehen ist, die nach Unterschreiten dieses Verhältnisses (v₀) mittels des hydraulischen Radbremsregelsystems einen Soll-Druck (p₁, p₂) in den Radbremszylindern erzeugt, der die Auswirkung auf den Ist-Druck (p) durch die im Verhältnis zur Betätigungskraft (F_{B}) abnehmende Hilfskraft zumindest teilweise kompensiert.

2. Bremsanlage nach Patentanspruch 1, **dadurch gekennzeichnet, daß** durch konstruktive Ausgestaltung des Bremkraftverstärkers dem Unterschreiten eines vorgegebenen Verhältnisses (v₀) der Hilfskraft zur Betätigungskraft (F_{B}) ein mechanischer Anschlag zugeordnet ist, der mit einer elektrischen Sensorvorrichtung (14) zusammenwirkt.

3. Bremsanlage nach Patentanspruch 1, **dadurch gekennzeichnet, daß** der Bremskraftverstärker ein Hilfsdruck-Bremskraftverstärker ist, daß das Unterschreiten eines vorgegebenen Verhältnisses (v₀) der Hilfskraft zur Betätigungskraft (F_{B}) dem zumindest nahezu vollständigen Erreichen des Aussteuerungspunktes (AP) des Hilfsdruck-Bremskraftverstärkers entspricht, und daß das zumindest nahezu vollständige Erreichen des Aussteuerungpunktes (AP) durch ein elektrisches Signal erfaßt wird, das eine Drucksensorvorrichtung (13) abgibt, wenn der Hilfsdruck zumindest nahezu vollständig erschöpft ist.

## Claims

1. A braking system for motor vehicles with a brake booster, which generates an output braking force by the superimposition of the operating force and an auxiliary force, and with a hydraulic wheel brake regulating system, by which a higher controlled pressure can be generated in the wheel brake cylinders than that provided by the output braking force, **characterised in that** an evaluating device is provided, which detects the under achievement of a prescribed ratio (v₀) of the auxiliary power to the operating force (F_{B}) and that a control device is provided, which following the underachievement of this ratio (v₀) generates a target pressure (p₁, p₂) in the wheel brake cylinders by means of the hydraulic wheel brake regulating system, which compensates at least in part for the effect on the actual pressure (p) by the reducing auxiliary power in the ratio to the operating force (F_{B}).

2. A braking system according to Claim 1 **characterised in that** by a constructional extension to the brake booster a mechanical stop is assigned to the underachievement of the prescribed ratio (v₀) of auxiliary power to operating force (F_{B}), which works together with an electrical sensor device (14).

3. A braking system according to Claim 1 **characterised in that** the brake booster is an auxiliary pressure brake booster, in which the underachievement of a prescribed ratio (v₀) of auxiliary power to operating force (F_{B}) corresponds at least almost to full attainment of the cut out point (AP) of the auxiliary pressure brake booster, and that the almost full attainment of the cut out point (AP) is detected by an electrical signal, which is emitted by a pressure sensor device (13), when the auxiliary pressure is at least almost completely exhausted.

## Revendications

1. Installation de freinage pour véhicules, comprenant un amplificateur de freinage délivrant en sortie une force de freinage résultant de la superposition de la force d'actionnement et d'une force auxiliaire, et un système hydraulique de régulation du freinage des roues, permettant d'obtenir dans les cylindres de freinage des roues, une pression supérieure à celle réglée par la force de freinage de sortie,
**caractérisée par**
un dispositif de valorisation qui détecte le sous-dépassement d'un rapport (v_{O}) donné à l'avance entre la force auxiliaire et la force d'actionnement (F_{B}), et
un dispositif de commande qui, quand ce rapport (v_{O}) est sous-dépassé, produit dans les cylindres de frein, par l'intermédiaire du système hydraulique de régulation des freins de roue, une pression imposée (p₁, p₂) qui compense au moins partiellement l'effet exercé sur la pression réelle (p) par la force auxiliaire diminuant en proportion par rapport à la force d'actionnement (F_{B}).

2. Installation de freinage selon la revendication 1,
**caractérisée en ce que**
la configuration constructive de l'amplificateur de la force de freinage associe au sous-dépassement d'une valeur donnée (v_{O}) du rapport de la force auxiliaire à la force d'actionnement (F_{B}), une butée mécanique qui coopère à un dispositif électrique de détection (14).

3. Installation de freinage selon la revendication 1,
**caractérisée en ce que**
l'amplificateur de freinage est un amplificateur à pression auxiliaire et le sous-dépassement d'un rapport donné (v_{O}) de la force auxiliaire et la force d'actionnement (F_{B}) correspond au moins à peu près à l'atteinte du point de réglage maximal (AP) de l'amplificateur de freinage à pression auxiliaire, et, quand ce point est à peu près atteint, un signal électrique est émis par un dispositif de détection de pression (13) si la pression auxiliaire a au moins à peu près totalement disparu.
